# EUROPEAN PATENT SPECIFICATION

(11) **EP 1 480 087 B1**
(45) Date of publication and mention of the grant of the patent: **28.08.2013**
(21) Application number: 04011820.0
(22) Date of filing: 18.05.2004
(51) Int. Cl.: G03G 9/08, B29C 44/34, B01F 7/08

(54) **Kneading and pulverizing method for producing a toner**
Pulverisierungs- und Knetverfahren zur Herstellung von Tonern
Procédé de pulvérisation et de pétrissage pour la fabrication de toner

(30) Priority: 19.05.2003 JP 2003140977
(43) Date of publication of application: 24.11.2004
(73) Proprietor: Ricoh Company, Ltd., Tokyo 143-8555 (JP)
(72) Inventor: Murakami, Fumitoshi, Ohta-ku Tokyo 143-8555 (JP); Makino, Nobuyasu, Ohta-ku Tokyo 143-8555 (JP); Hirai, Makoto, Ohta-ku Tokyo 143-8555 (JP); Takahashi, Mutsumi, Ohta-ku Tokyo 143-8555 (JP)
(74) Representative: Barz, Peter

(56) References cited:
- EP-A- 0 610 953
- EP-A- 0 749 049
- EP-A- 0 818 292
- EP-A- 0 972 626
- WO-A-02/090085
- US-A- 5 334 356
- US-A- 5 487 965
- US-A- 5 516 618
- US-A- 6 054 179
- US-A1- 2001 036 586

## Description

### BACKGROUND OF THE INVENTION

### Field of the Invention

The present invention relates to a kneading and pulverizing method for producing a toner for electrophotography according to claim 1.

### Discussion of the Background

As for recent images formed by electrophotographic processes, the number of graphic images such as photographs increases in addition to productions of conventional letter printsbecause of digitalization,and popularization of networks and computers. The image is required to have a quality equivalent to that of a silver salt photographs, and therefore a toner for electrophotography is required to have a small particle diameter of from 5 to 6 µm and a narrow distribution. Accordingly, a method of efficiently producing the toner is desired.

As one of the methods, a polymerization method is recently used. However, the method requires a large amount of water and solvent although producing less carbon dioxide than conventional production methods including kneading, pulverizing, classifying, mixing and sieving processes. Further, the method requires a huge plant and the initial cost is so large that the method is unpayable unless mass-producing the toner. Therefore, the method has rather an expensive production cost.

However, a pulverizer needs to be upgraded in the conventional production methods including kneading, pulverizing, classifying, mixing and sieving processes to pulverize the toner so as to have a small particle diameter and an enormous amount of energy is consumed. Further, ultra-fine particles are produced due to an excessive pulverization, resulting in large deterioration of productivity.

These problems result in increase of production cost of the toner, and various improvements such as an improvement of pulverizing efficiency are studied.

The improvements include a method of including a pulverizing aid in toner materials to improve pulverizability of thereof when kneaded in a pulverization method.

For example, Japanese Laid-Open Patent publication No. 10-207124 discloses a method of including an ester compound having a weight-average molecular weight of from 300 to 4, 000 formed from a reaction between a propane diol derivative and a terephthalic acid or an isophthalic acid and a carboxylic acid derivative selected from esters of the isophthalic acid in toner materials as a pulverizing aid to improve pulverizability of the resultant toner.

However, the resultant toner has too low a molecular weight in the method and easily adheres on internal parts of a pulverizer, a classifier and a piping to affect the product condition, and not a little affect chargeability and fixability of the resultant toner.

Further, for a similar purpose, Japanese Laid-Open Patent publication No. 2001-92178 discloses a method of including a pulverizing aid to improve pulverizability of the resultant toner, which is a polymer of a monomer selected from the group consisting of vinyltoluene, α-methylstyrene and isopropenyltoluene, and which has a softening point of from 130 to 170 °C measured by a ring-and-ball test; or a copolymer between styrene and the monomer selected from the group consisting of vinyltoluene, α - methylstyrene and isopropenyltoluene, and which has a softening point of from 110 to 170 °C measured by the ring-and-ball test. However, when actually producing the toner, 10 parts by weight of the pulverizing aid is included in 90 parts by weight of a main resin, which is so large that the aidbadly affects properties of the resultant toner, such as fixability and chargeability. Japanese Laid-Open Patent publications Nos. 1-182856, 9-146299 and 2000-19775 disclose a method of further including a chemical foaming agent in plural materials forming a toner when kneaded upon application of heat or a method of previously including and dispersing the chemical foaming agent in a binder resin; applying a heat to the binder resin to generate a carbon dioxide gas or a nitrogen gas therein to foam the binder resin; and forming a crack interface with inner air bubbles to improve pulverizing efficiency in the following process.

Specific examples of the chemical foaming agent include hydrogen carbonate of alkali metals such as sodium or kalium; chemical foaming agent of heavy metals such as mercury or cadmium; or inorganic materials such as ammonium carbonate; and organic materials such as an azido compound, azodicarbonamide, diaminobenzene and chlorofluorocarbon 11 or 12. Some of the chemical foaming agents are hazardous materials in handling or cause environmental contaminations. In addition, the chemical foaming agents need to be heated to be foamed, and a heat stress is given to a low-temperature fixable toner which has recently gotten attentions. Further, occasionally properties of the chemical foaming agents themselves badly affect properties of the resultant toner, such as fixability and chargeability.

Japanese Laid-Open Patent publication No. 2003-10666 discloses a method of foaming a binder resin (not for a toner) forming a foam while preventing discoloration and carbonization of a thermoplastic resin in a kneading process, wherein carbon dioxide is included in the kneading process to form air bubbles. When the method is applied to the production of a toner, the inactive gas tends to be unevenly dispersed in melted resins although not badly affecting the toner qualities, and air bubbles has a ratio of at most 60 % by volume in the resins. Therefore, the method can exert an effect on pulverizability of the resultant toner at most to half, and does not exert a sufficient effect on the pulverizability of the resultant toner so as to have a required particle diameter of from 5 to 6 µm.

Japanese Patent No. 2625576 discloses a method of producing foams and foaming plastics having quite small-sized air bubbles by using a supercritical fluid.

The above-mentioned conventional faming methods using the chemical foaming agents deteriorates strength of the resultant foams although being capable of saving weight of foaming resins, and applications of the foams are limited. However, the microscopic air bubble foaming technology (MCF: Micro Cellular Foaming) disclosed in Japanese Patent No. 2625576 using the supercritical fluid developed by MIT in US is capable of producing a resin wherein microscopic air bubbles having a size of 5 µm or less are uniformly foamed.

This method specifically foams a single polymer material to finally produce a foamed material or product having a small-sized air bubbles. However, the toner for electrophotography includes not only a binder resin but also other materials such as a colorant. Further, a kneaded mixture formed of plural materials and prepared in a process of producing the toner is further pulverized to form the final toner, and therefore the method disclosed in Japanese Patent No. 2625576 cannot directly be applied to production of the toner for electrophotography.

In addition, even if air bubbles having a density of 10⁹/cm³ and a size of 5 µm or less are formed in the kneaded mixture, the pulverizability of the resultant toner is not largely improved, and an ultrafine powder is generated to impair an improvement of yield.

Because of these reasons, a need exists for a method of producing a toner for electrophotography by kneading and pulverizing methods, which improves pulverizability of a kneaded mixture and prevents an ultrafine powder from being generated.

EP-A-0749049 relates to a toner for developing electrostatic images and a process for the production thereof in which a process of producing a toner including a binder resin and a colorant is described which comprises kneading a mixture comprising the binder and the colorant under pressure upon application of heat, cooling the mixture to prepare a kneaded mixture, and pulverizing the kneaded mixture.

### SUMMARY OF THE INVENTION

Accordingly, an object of the present invention is to provide a method for producing a toner by kneading and pulverizing methods, which improves pulverizability of a kneaded mixture and prevents an ultrafine powder from being generated.

Briefly these objects and other objects of the present invention as hereinafter will become more readily apparent can be attained by a method of producing a toner including at least a binder resin and a colorant including kneading a mixture comprising the binder resin and the colorant under pressure while injecting a supercritical fluid into the mixture upon application of heat to uniformly disperse the supercritical fluid in the mixture, wherein the pressure in the kneading step is from 4 to 25 MPa; depressurizing the mixture such that the mixture foams; cooling the mixture to prepare a kneaded mixture including air bubbles; and pulverizing the kneaded mixture.

In addition, the supercritical fluid is preferably carbon dioxide or nitrogen,

Further, the mixture is preferably kneaded at a temperature of from 10 °C lower than a melting point of a toner to 100 °C higher than the melting point thereof or of from 30 °C lower than a glass transition temperature thereof to 150 °C higher than the glass transition temperature thereof.

These and other objects, features and advantages of the present invention will become apparent upon consideration of the following description of the preferred embodiments of the present invention taken in conjunction with the accompanying drawings.

### BRIEF DESCRIPTION OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:
Fig. 1 is a schematic view illustrating a foaming kneader for use in the present invention;
Fig. 2 is a macrophotograph showing a status of formation of air bubbles in toner constituents after foamed and kneaded; and
Fig. 3 is a macrophotograph showing a crushed status of the foamed and kneaded toner constituents (having a weight-average particle diameter not greater than 60 µm) in Fig. 2.

### DETAILED DESCRIPTION OF THE INVENTION

Generally, the present invention provides a method of producing a toner including'injecting a supercritical fluid into a mixture comprising a binder resin and a colorant under pressure while kneading the mixture upon application of heat to uniformly disperse the supercritical fluid in the mixture; depressurizing the mixture to foam the mixture; cooling the mixture to prepare a kneaded mixture including air bubbles; and pulverizing the kneaded mixture.

Namely, the method of producing a toner for electrophotography of the present invention mixes materials forming the toner such as a binder resin and a colorant (hereinafter referred to as toner constituents) to prepare a mixture; injects and disperses a supercritical fluid in the mixture, and pressurizes the mixture; and depressurizes the mixture to quickly foam the mixture and form a crack interface of an inner air bubble and an air bubble film. The kneadedmixture having the crack interface can efficiently be pulverized to small-sized particles and the resultant toner has a satisfactory quality without trouble through the production process.

The above-mentioned pressurizing and depressurizing are relative to each other, and e.g., the pressure can be reduced to an atmospheric pressure.

The method can form air bubbles having a particle diameter of from 20 to 200 µm and does not form air bubbles having a micro diameter, and therefore, production of an ultrafine powder having a particle diameter of 2 µm or less can be prevented.

The supercritical fluid has a smaller viscosity than a gaseous body although having a high density, and has a diffusion coefficient almost several hundred times the diffusion coefficient of a gaseous body. Therefore, air bubbles formed by the supercritical fluid have uniform diameters, which is largely different from that of conventional foaming using a gaseous body. When the supercritical fluid is used in the method of producing a toner of the present invention, a crack interface formed between an air bubble formed of a film of the kneaded mixture having a thickness of from 2 to 15 µm and an inner air bubble can noticeably improve pulverizability of the resultant toner.

Hereinafter, to separate a final product, i.e., a toner after pulverized from a mixture or a kneaded mixture of plural toner materials, the mixture or kneaded mixture thereof is called toner constituents.

In particular, carbon dioxide or nitrogen in a supercritical state is effectively used as the supercritical fluid in the present invention.

Specific examples of the chemical foaming agents for foaming and kneading the toner constituents include low-boiling-point chlorofluorocarbon, a hydrofluorocarbon compound, propane, butane, carbon hydride, etc. However, these agents occasionally affect quality of the resultant toner badly, are occasionally dangerous in handling or occasionally contaminate the environment.

The method of using the carbon dioxide or nitrogen as the supercritical fluid does not cause the quality problems of the resultant toner, is safe and favorable for the environment.

Particularly, the carbon dioxide is easy to care for, low toxic and low cost. In addition, an apparatus capable of supplying a fixed amount of the carbon dioxide is prevalent in the market, and the apparatus can easily be obtained or prepared. However, the supercritical fluid is not limited to the carbon dioxide.

In the method of producing a toner of the present invention, the supercritical fluid is put into a kneader, wherein the supercritical fluid is injected and dispersed in melted toner constituents, particularly in a resin under pressure and the fluid in the toner constituents, particularly in the resin is quickly foamed under reduced pressure to form air bubbles in a kneaded mixture. When the pressure is too high, the air bubbles burst. When the pressure is too low, the air bubbles cannot be formed in the resin. Therefore, the pressure is from 4 to 25 MPa, and more preferably from 7 to 11 MPa.

To uniformly inject and disperse the supercritical fluid in melted toner constituents, the melted toner constituents preferably have a temperature not too higher or too lower than a melting point or a glass transition point thereof. When the temperature is to low, air bubbles have small diameters and an air bubble film is too thick. When the temperature is to high, air bubbles have large diameters and an air bubble film is too thin.

The temperature is preferably from -10 to +100 °C from a melting point of the kneaded mixture formed from the toner constituents or from +30 to +150 °C from a glass transition temperature thereof. More preferably from -5 to +150 °C and +40 to +100 °C respectively.

The supercritical fluid is preferably injectedto the toner constituents in an amount of from 0.5 to 10 % by weight, and more preferably not greater than 5 % by weight based on total weight of resins included in the toner constituents.

In consideration of pulverizability and prevention of generation of an ultrafine powder, the kneaded mixture including the toner constituents and supercritical fluid preferably has air bubbles of from 10⁴ to 10⁸ pieces/cm³ in the resin and 65 to 96 % by volume therein, and more preferably from 10⁶ to 10⁷ pieces/cm³ and 85 to 95 % by volume.

When the number of the air bubbles is small and the percentage by volume is large, the volume of the toner constituents increases to become difficult to handle, and pulverizability of the resultant toner tends to deteriorate. Even when the number of the air bubbles is large and the percentage by volume is small, the pulverizability does not improve. The number and volume of the air bubbles can be controlled by an injection amount of the supercritical fluid, a temperature and a pressure of the melted toner constituents.

The air bubbles particularly formed in the resin in the kneaded mixture preferably have a thickness of from 4 to 7 µm.

When the thickness is too thin, ultrafine powders increases. When too thick, the pulverizability of the resultant toner tends to deteriorate.

Either a biaxial kneader or a uniaxial kneader can be used for preparing the kneaded mixture. Specific examples of the biaxial kneader include known same-direction biaxial rotational extruders such as TEM series from Toshiba Machine Co., Ltd and TEX series from Japan Steel Works, Ltd.

A ring die or a T die used for forming a foamed sheet is preferably used to foam the toner constituents to form air bubbles therein. Even a simple ting nozzle can foam the toner constituents.

Conventionally, the melted toner constituents are kneaded and discharged in the shape of a stick or a plate, and cooled and extended by an extension cooler to have the shape of a sheet. Then, the cooled and extended toner constituents are pulverized.

However, in the present invention, the toner constituents can be cooled by an adiabatic expansion which occurs in the process of forming air bubbles in the toner constituents. Then, the toner constituents can be quickly cooled to have a temperature of 30 °C or less by a simple cold blaster, and therefore the conventional extension cooling process can be omitted.

Further, the quick cooling can uniformly disperse and fix a colorant, a charge controlling agent, wax, etc. in a binder resin to form a quality toner.

A continuous kneader equipped with an injection and dispersion zone of the supercritical fluid can foam and knead the toner constituents.

In addition, after the toner constituents are kneaded upon application of heat by a continuous kneader, the toner constituents can be fed by a volumetric feeder to a parallelly formed foaming kneader having an injection and dispersion zone of the supercritical fluid to be foamed.

Further, the pulverized toner constituents after kneaded, extended and cooled can be fed to a foaming kneader having an injection and dispersion zone to be melted again and foamed.

The above-mentioned methods can be used for foaming and kneading the toner constituents.

A variety of arrangement of the present kneaders can be realized, such as TCS series from Buss AG, TEM series from Toshiba Machine Co., Ltd and TEX series from Japan Steel Works, Ltd.

The kneaded mixture including air bubbles, prepared by the method of the present invention can easily be pulverized by a mechanical pulverizer to form a desired toner having a volume-average particle diameter not greater than 12 µm.

Namely, the pulverizing method of producing a toner of the present invention foams a kneaded mixture and forms a crack interface therein with inner air bubbles to improve pulverizability of the resultant toner. Specific examples of the mechanical pulverizer include TURBO MILL® from TURBO KOGYO CO., LTD., INOMIZER® from Hosokawa Micron Corp., Kryptron ® from Kawasaki Heavy Industries, Ltd. and Fine Mill from Nippon Pneumatic Mfg. Co., Ltd., etc.

Further, an air (jet) stream pulverizer can prepare a toner having a weight-average particle diameter of from 4 to 6 µm.

Specific examples of the air stream pulverizer include IDS-type supersonic jet mill ® from Nippon Pneumatic Mfg. Co., Ltd. , fluidized-bed counter jet mill® from Hosokawa Micron Corp. , cross jet mill ® from KURIMOTO, LTD. and CGS-type jet mill ® from Condux International, Inc., etc.

Next, the toner constituents will be explained. Known binder resins and colorants can be used in the toner.

Specific examples of the binder resin for use in the toner include vinyl resins, polyester resins or polyol resins. Particularly, the polyester resins or polyol resins is preferably used.

Specific examples of the vinyl resins include polymers of styrene and its substitutes such as polystyrene, poly-p-chlorostyrene and polyvinyltoluene, styrene copolymers such as styrene-p-chlorostyrene copolymers, styrene-propylene copolymers, styrene-vinyltoluene copolymers, styrene-vinylnaphthalene copolymers, styrene-methyl acrylate copolymers, styrene-ethyl acrylate copolymers, styrene-butyl acrylate copolymers, styrene-octyl methacrylate copolymers, styrene-butyl methacrylate copolymers, styrene-α-methyl chloromethacrylate copolymers, styrene-acrylonitrile copolymers, styrene-vinyl methyl ether copolymers, styrene-vinyl ethyl ether copolymers, styrene-vinyl methyl ketone copolymers, styrene-butadiene copolymers, styrene-isoprene copolymers, styrene-acrylonitrile-indene copolymers, styrene-maleate copolymers and styrene-ester maleate copolymers, polymethyl methacrylate, polyvinyl chloride, polyvinyl acetate, etc.

Specific examples of the polyester resins include the polyester resins constituted of one or more of the following dihydric alcohols in group A and one or more of the dibasic acids in group B and optionally one or more of the following alcohols having not less than 3 hydroxyl groups or carboxylic acids of Group C.

Group A: ethylene glycol, triethylene glycol, 1,2-propylene glycol, 1,3-propylene glycol, 1,4-butane diol, neopentyl glycol, 1,4-butene diol, 1,4-bis(hydroxymethyl)cyclohexane, bisphenol A, hydrogenated bisphenol A, polyoxyethylenated bisphenol A, polyoxypropylene-(2,2)-2,2'-bis(4-hydroxyphenyl)propane, polyoxypropylene-(3,3)-2,2-bis(4-hydroxyphenyl)propane, polyoxyethylene-(2,0)-2,2-bis(4-hydroxyphenyl)propane, polyoxypropylene-(2,0)-2,2'-bis(4-hydroxyphenyl)propane, etc.

Group B: maleic acid, fumaric acid, mesaconic acid, citraconic acid, itaconic acid, glutaconic acid, phthalic acid, isophthalic acid, terephthalic acid, cyclohexane dicarboxylic acid, succinic acid, adipic acid, sebacic acid, malonic acid, a linolenic acid or their anhydrides, or esters thereof with lower alcohols, etc.

Group C: alcohols having not less than 3 hydroxyl groups such as glycerin, trimethylolpropane and pentaerythritol, and carboxylic acids having not less than 3 carboxyl groups such as trimellitic acid and pyromellitic acid.

Specific examples of the polyol resins include reaction products of the following components:
an epoxy resin;
an adduct of a dihydric phenol compound with an alkylene oxide or its glycidyl ether compound;
a compound having one active hydrogen atom reactive with the epoxy resin; and
a compound having two or more active hydrogen atoms reactive with the epoxy resin.

Further, epoxy resins, polyamide resins, urethane resins, phenol resins, butyral resins, rosins, denatured rosins, terpene resins, etc. can optionally be added to the above-mentioned resins.

Specific examples of the black pigments for use in the present invention include azine pigments such as carbon black, oil furnace black, channel black, lamp black, acetylene black and aniline black, metal salts of azo pigments, metal oxides, complex metal oxides, etc.

Specific examples of the yellow pigments for use in the present invention include cadmium yellow, Mineral Fast Yellow, Nickel Titan Yellow, naples yellow, Naphthol Yellow S, Hansa Yellow G, Hansa Yellow 10G, Benzidine Yellow GR, Quinoline Yellow Lake, Permanent Yellow NCG, Tartrazine Lake, etc.

Specific examples of the orange color pigments for use in the present invention include Molybdenum Orange, Permanent Orange GTR, Pyrazolone Orange, Vulcan Orange G, Indanthrene Brilliant Orange GK, etc.

Specific examples of the red pigments for use in the present invention include red iron oxide, cadmium red, Permanent Red 4R, Lithol Red, Pyrazolone Red, Watching Red calcium salts, Lake Red D, Brilliant Carmine 6B, Eosine Lake, Rhodamine Lake B, Alizarine Lake, Brilliant Carmine 3B, etc.

Specific examples of the violet pigments for use in the present invention include Fast Violet B, Methyl Violet Lake, etc.

Specific examples of the blue pigments for use in the present invention include cobalt blue, Alkali Blue, Victoria Blue Lake, Phthalocyanine Blue, metal-free Phthalocyanine Blue, partialy chlorinated Phthalocyanine Blue, Fast Sky Blue, Indanthrene Blue BC, etc.

Specific examples of the green pigments for use in the present invention include a chrome green, chrome oxide, Pigment Green B, Malachite Green Lake, etc.

These pigments can be used alone or in combination, and typically included in the toner in an amount of from 0.1 to 50 parts by weight per 100 parts by weight of the binder resin.

To impart a releasability to the toner, known release agents, e.g., synthesized waxes such as low-molecular-weight polyethylene and low-molecular-weight polypropylene; and natural waxes such as carnauba wax, rice wax and lanoline can be used.

A charge controlling agent can be used in the toner. Specific examples of the charge controlling agent include known charge controlling agents such asnigrosin, modified fatty acid metal salts, acetylacetonemetal complexes, mono azo metal complexes and naphtoic acids.

The toner may be a magnetic toner. Specific examples of the magnetic material include knownmagnetic materials, e.g., iron oxides such as magnetite and hematite.

Having generally described this invention, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

### Example 1

100.0 parts of polyol resin, 6.0 parts of quinacridone magenta pigment (C.I. Pigment Red122) and 2.0 parts of zinc salicylate salt as a charge controlling agent were mixed by Super Mixer ® from KAWATA MFG Co., Ltd.

After the mixture was fed from a constant-flow feeder (2) into a hopper (3) in a biaxial kneader TEM ® (1) from Toshiba Machine Co., Ltd., the mixture was melted upon application of heat at 140 °C in a melting zone (4), and kneaded and dispersed in a kneading zone (5) of the biaxial kneader. Then, a supercritical fluid was put in the mixture and dispersed in a supercritical fluid injection and dispersion zone (6).

Respective zones of the kneader had different pressures, e.g., the melting zone (4) had an atmosphere pressure and the supercritical fluid injection and dispersion zone (6) had a pressure of 15 Mpa.

A carbon dioxide in a supercritical state was used as the supercritical fluid, which was controlled to have a pressure of 15 MPa and a temperature of 38 °C by a supercritical fluid control feeder (7), and injected to and dispersed with the above-mentioned toner constituents melted at 140 °C in an amount of 3.0 % by weight based on total weight of the toner constituents.

Next, after the toner constituents were cooled to have a temperature of 120 °C in a temperature control zone (8), the toner constituents were discharged from a ring nozzle (9) under an atmosphere pressure to be foamed. Then, the toner constituents were cooled to have a temperature not greater than 30 °C by a cold blaster (10) to prepare a kneaded mixture including the toner constituents and air bubbles.

### Example 2

The procedures for preparation of the kneaded mixture including the toner constituents and air bubbles in Example 1 were repeated except for injecting the carbon dioxide in a supercritical state in an amount of 1.5 % by weight based on total weight of the toner constituents to prepare a kneaded mixture including the toner constituents and air bubbles.

### Example 3

The procedures for preparation of the kneaded mixture including the toner constituents and air bubbles in Example 1 were repeated except for injecting and dispersing the carbon dioxide in a supercritical state in the toner constituents melted at 120 °C and cooling the toner constituents to have a temperature of 90 °C to prepare a kneaded mixture including the toner constituents and air bubbles.

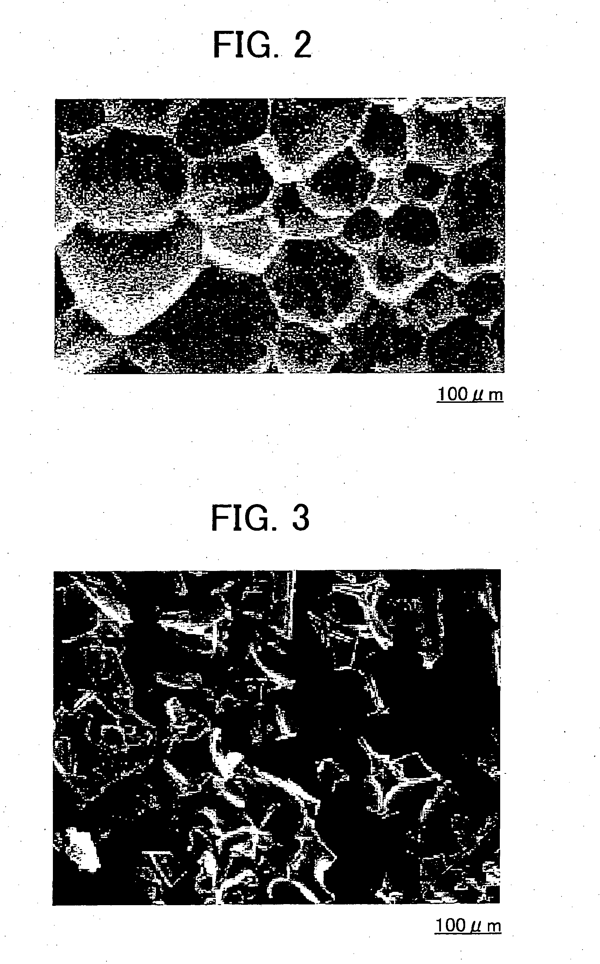

Fig. 2 shows a foamed status of the kneaded mixture including the toner constituents and air bubbles.

### Example 4

The procedures for preparation of the kneaded mixture including the toner constituents and air bubbles in Example 3 were repeated except for injecting the carbon dioxide in a supercritical state in an amount of 1.5 % by weight based on total weight of the toner constituents to prepare a kneaded mixture including the toner constituents and air bubbles.

### Example 5

The procedures for preparation of the kneaded mixture including the toner constituents and air bubbles in Example 1 were repeated except for mixing 100.0 parts of polyester resin, 8.0 parts of carbon black, 4.0 parts of wax and 1.0 part of zirconium oxide complex salt as a charge controlling agent as the toner constituents to prepare a kneaded mixture including the toner constituents and air bubbles.

### Example 6

The procedures for preparation of the kneaded mixture including the toner constituents and air bubbles in Example 3 were repeated except for mixing 100. 0 parts of polyester resin, 8.0 parts of carbon black, 4.0 parts of wax and 1.0 part of zirconium oxide complex salt as a charge controlling agent as the toner constituents to prepare a kneaded mixture including the toner constituents and air bubbles.

### Example 7

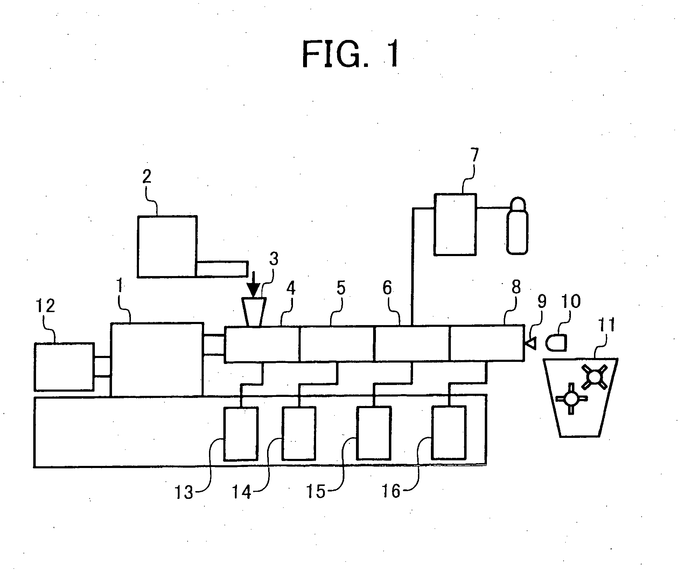

The kneaded mixture prepared in Example 3 was broken by a pin-type breaker as shown in Fig. 1, crushed by a rotational hammer crusher from Hosokawa Micron Corp. to have a weight-average particle diameter not greater than 60 µm and pulverized by a mechanical turbo mill from TURBO KOGYO CO., LTD. to prepare a toner having a weight-average particle diameter of 9.0 µm.

Next, the toner having a weight-average particle diameter of 9.0 µm was classified by a rotational rotor classifier from Hosokawa Micron Corp. to have a weight-average particle diameter of 9.8 µm. Then, 0.8 parts of hydrophobic silica and 0.4 parts of titanium oxide were mixed with the toner and an agglomerate was removed therefrom by a supersonic vibration sieve to prepare a final toner.

A status of the kneaded mixture including air bubbles which was crushed by a rotational hammer crusher is shown in Fig. 3, wherein the kneaded mixture was crushed along an interface of air bubbles.

### Comparative Example 1

100.0 parts of polyol resin, 6.0 parts of quinacridone magenta pigment (C.I. Pigment Red122) and 2.0 parts of zinc salicylate salt as a charge controlling agent were mixed by Super Mixer® from KAWATA MFG Co., Ltd.

After the mixture was fed from a constant-flow feeder (2) into a hopper (3) in a biaxial kneader TEM® (1) from Toshiba Machine Co., Ltd., the mixture was melted upon application of heat at 120 °C in a melting zone (4), and kneaded and dispersed in a kneading zone (5) of the biaxial kneader.

Next, after the toner constituents were cooled to have a temperature of 90 °C in a temperature control zone (8), the toner constituents were cooled to have a temperature not greater than 30 °C by a rolling cooler.

The kneaded mixture was broken by a pin-type breaker, crushed by a rotational hammer crusher from Hosokawa Micron Corp. to have a weight-average particle diameter not greater than 250 µm and pulverized by a mechanical turbo mill from TURBO KOGYO CO., LTD. to prepare a toner having a weight-average particle diameter of 8.9 µm.

Next, the toner having a weight-average particle diameter of 8. 9 µm was classified by a rotational rotor classifier from Hosokawa Micron Corp. to have a weight-average particle diameter of 9.7 µm. Then, 0.8 parts of hydrophobic silica and 0.4 parts of titanium oxide were mixed with the toner and an agglomerate was removed therefrom by a supersonic vibration sieve to prepare a final toner.

### Example 8

After the toner having a weight-average particle diameter of 9.0 µm prepared in Example 7 pulverized by a fluidized-bed jet mill from Hosokawa Micron Corp. to have a weight-average particle diameter of 4.5 µm, the toner was classified by a rotational rotor classifier from Hosokawa Micron Corp. to have a weight-average particle diameter of 5.3 µm. Then, 1.2 parts of hydrophobic silica and 0. 6 parts of titanium oxide were mixed with the toner and an agglomerate was removed therefrom by a supersonic vibration sieve to prepare a final toner.

### Comparative Example 2

The toner having a weight-average particle diameter of 8.9 µm prepared in Comparative Example 1 was pulverized by a fluidized-bed jet mill from Hosokawa Micron Corp. and classified by a rotational rotor classifier from Hosokawa Micron Corp. to have a weight-average particle diameter of 5.2 µm. Then, 1.2 parts of hydrophobic silica and 0. 6 parts of titanium oxide were mixed with the toner and an agglomerate was removed therefrom by a supersonic vibration sieve to prepare a final toner.

### Example 9

After the toner having a weight-average particle diameter of 9.0 µm prepared in Example 7 pulverized by a supersonic jet mill from Nippon Pneumatic Mfg. Co. , Ltd. to have a weight-average particle diameter of 4.3 µm, the toner was classified by a rotational rotor classifier from Hosokawa Micron Corp. to have a weight-average particle diameter of 5.0 µm. Then, 1.2 parts of hydrophobic silica and 0. 6 parts of titanium oxide were mixed with the toner and an agglomerate was removed therefrom by a supersonic vibration sieve to prepare a final toner.

### Comparative Example 3

The toner having a weight-average particle diameter of 8.9 µm prepared in Comparative Example 1 was pulverized by a supersonic jet mill from Nippon Pneumatic Mfg. Co., Ltd. and classified by a rotational rotor classifier from Hosokawa Micron Corp. to have a weight-average particle diameter of 5.2 µm. Then, 1.2 parts of hydrophobic silica and 0. 6 parts of titanium oxide were mixed with the toner and an agglomerate was removed therefrom by a supersonic vibration sieve to prepare a final toner.

Image tests and evaluations thereof were performed as follows:

### (1) Foggy image.

Toner contaminations over background images were observed. Good images without the toner contamination were ○, usable images with some of the 'toner contamination were Δ and unusable images were ×.

### (2) Image resolution

Black thin lines were drawn in a width of 1 mm on a blank Image, which were copied to observe how many of the black thin lines can be identified.

### (3) Image density

A reflection density of a black solid image was measured by a Macbeth densitometer.

### (4) Granularity

An image density was measured by Nexscan F4100® from HEIDELBERGandthe granularitywas computed according to Dooley' s definition.

Evaluation results of the Examples and Comparative Examples are shown in Table 4.

Tables 1 and 2 show toner materials formulation, Table 2 shows foaming and kneading conditions of the toner materials.

**Table 1**

| Toner materials formulation A | |
|---|---|
| Name of materials | Parts by weight |
| Polyol resin | 100.0 |
| Magenta pigment | 6.0 |
| Zinc salicylate salt | 2.0 |
| Total | 108.0 |

**Table 2**

| Toner materials formulation A | |
|---|---|
| Name of materials | Parts by weight |
| Polyester resin | 100.0 |
| Carbon black | 8.0 |
| Wax | 4.0 |
| Zirconium oxide complex salt | 1.0 |
| Total | 108.0 |

**Table 3**

| Results of foamed and kneaded toner materials | | | | | | | |
|---|---|---|---|---|---|---|---|
| | Unit | Ex. 1 | Ex. 2 | Ex. 3 | Ex. 4 | Ex. 5 | Ex. 6 |
| Toner materials | - | A | A | A | A | B | B |
| Feeding amount of the toner materials | Kg/h | 15 | 15 | 15 | 15 | 15 | 15 |
| Melting zone temperature | °C | 140 | 140 | 120 | 120 | 140 | 120 |
| Injection/ dispersion zone temperature | °C | 140 | 140 | 120 | 120 | 14 0 | 120 |
| Temperature control zone temperature | °C | 120 | 120 | 90 | 90 | 120 | 90 |
| Injection amount of CO² | % by weight | 3.0 | 1.5 | 3.0 | 1.5 | 3.0 | 3.0 |
| Injection pressure of CO² | MPa | 15 | 15 | 15 | 15 | 15 | 15 |
| Injection temperature of carbon dioxide | °C | 38 | 38 | 38 | 38 | 38 | 38 |
| Temperature control zone pressure | Mpa | 10 | 10 | 10 | 10 | 10 | 10 |
| The number of air bubbles | pcs/cm³ | 10⁴ to 10⁷ | 10⁵ to 10⁷ | 10⁶ to 10⁸ | 10⁶ to 10⁸ | 10⁵ to 10⁷ | 10⁶to 10⁷ |
| A ratio of air bubbles | % by volume | 93 | 92 | 90 | 90 | 92 | 91 |
| Thickness of air bubble film | µm | 2 to 5 | 2 to 5 | 3 to 8 | 4 to 9 | 5 to 15 | 6 to 15 |

**Table 4**

| Toner pulverizability and image test results | | | | | | | |
|---|---|---|---|---|---|---|---|
| | Unit | Ex. 7 | Com. Ex. 1 | Ex. 8 | Com. Ex. 2 | Ex. 9 | Com. Ex. 3 |
| Weight-average particle diameter after crushed | µm | 60 | 250 | 60 | 250 | 60 | 250 |
| weight-average particle diameter after Pulverized | µm | 9.0 | 8. 9 | 4.5 | 4 . 5 | 4 .3 | 4 .3 |
| Weight-average particle diameter after Classified | µm | 9.8 | 9.7 | 5.3 | 5.2 | 5.0 | 5.2 |
| Pulverizability | Kg/h | 30 | 18 | 10 | 6 | 9 | 5 |
| Foggy image | - | ○ | ○ | ○ | ○ | ○ | ○ |
| Image resolution | - | 5.7 | 5.8 | 7 | 6.9 | 7.5 | 7 |
| Image density | - | 1.50 | 1.49 | 1.47 | 1.48 | 1.45 | 1.47 |
| Granularity | - | 1.0 | 1.2 | 0.4 | 0.4 | 0.3 | 0.4 |

This document claims priority and contains subject matter related to Japanese Patent Application No. 2003-140977 filed on May 19, 2003.

## Claims

1. A method of producing a toner including at least a binder resin and a colorant, wherein the method comprises:
kneading a mixture comprising the binder resin and the colorant under pressure while injecting a supercritical fluid into the mixture upon application of heat to uniformly disperse the supercritical fluid in the mixture, wherein the pressure in the kneading step is from 4 to 25 MPa;
depressurizing the mixture such that the mixture foams;
cooling the mixture to prepare a kneaded mixture including air bubbles; and
pulverizing the kneaded mixture.

2. The method of Claim 1, wherein the supercritical fluid is selected from the group consisting of carbon dioxide and nitrogen.

3. The method of Claim 1 or 2, wherein the kneading is performed at a temperature of from 10 °C lower than the melting point of the mixture to 100 °C higher than the melting point thereof.

4. The method of Claim 1 or 2, wherein the kneading is performed at a temperature of from 30 °C lower than the glass transition temperature thereof to 150 °C higher than the glass transition temperature thereof.

5. The method of any one of Claims 1 to 4, wherein the kneading is performed while injecting the supercritical fluid into the mixture in an amount of from 0.5 to 10 % by weight based on total weight of the mixture.

6. The method of Claim 1, wherein the air bubbles are present in the kneaded mixture in an amount of from 10⁴ to 10⁸ pieces/cm³ and a ratio of the air bubbles to the kneaded mixture is from 65 to 95 % by volume.

7. The method of Claim 1 or 6, wherein a film of the kneaded mixture forming the air bubbles has a thickness of from 2 to 15 µm.

8. The method of any one of Claims 1 to 7, wherein the kneading is performed by a biaxial or a uniaxial continuous kneader.

9. The method of Claim 8, wherein the biaxial or uniaxial continuous kneader has an exhaust having a ring die shape or a T-die shape.

10. The method of Claim 1, wherein the cooling is performed with a cold wind such that the kneaded mixture has a temperature not greater than 30 °C.

11. The method of any one of Claims 1 to 10, wherein the pulverizing is performed by a mechanical pulverizer such that the kneaded mixture has a weight-average particule diameter not greater than 12 µm.

12. The method of any one of Claims 1 to 11, wherein the pulverizing is performed by a jet stream pulverizer or a mechanical pulverizer such that the kneaded mixture has a weight-average particle diameter of from 4 to 6 µm.

## Patentansprüche

1. Verfahren zur Herstellung eines Toners enthaltend mindestens ein Bindemittelharz und ein farbgebendes Mittel, wobei das Verfahren umfasst:
Kneten einer Mischung umfassend das Bindemittelharz und das farbgebende Mittel unter Druck, während ein überkritisches Fluid in die Mischung eingespritzt wird, bei Anwendung von Wärme, um das überkritische Fluid gleichmäßig in der Mischung zu dispergieren, wobei der Druck in dem Knetschritt 4 bis 25 MPa beträgt;
Entspannen der Mischung, so dass die Mischung schäumt;
Kühlen der Mischung, um eine geknetete Mischung enthaltend Luftblasen herzustellen; und
Pulverisieren der gekneteten Mischung.

2. Verfahren nach Anspruch 1, wobei das überkritische Fluid aus der Gruppe bestehend aus Kohlendioxid und Stickstoff ausgewählt wird.

3. Verfahren nach Anspruch 1 oder 2, wobei das Kneten bei einer Temperatur von 10 °C niedriger als der Schmelzpunkt der Mischung bis 100 °C höher als der Schmelzpunkt davon durchgeführt wird.

4. Verfahren nach Anspruch 1 oder 2, wobei das Kneten bei einer Temperatur von 30 °C niedriger als die Glasübergangstemperatur davon bis 150 °C höher als die Glasübergangstemperatur davon durchgeführt wird.

5. Verfahren nach irgendeinem der Ansprüche 1 bis 4, wobei das Kneten durchgeführt wird, während das überkritische Fluid in die Mischung in einer Menge von 0,5 bis 10 Gew.-%, bezogen auf das Gesamtgewicht der Mischung, eingespritzt wird.

6. Verfahren nach Anspruch 1, wobei die Luftblasen in der gekneteten Mischung in einer Menge von 10⁴ bis 10⁸ Stücken/cm³ und in einem Anteil der Luftblasen zu der gekneteten Mischung von 65 bis 95 Vol.-% vorliegen.

7. Verfahren nach Anspruch 1 oder 6, wobei ein Film der gekneteten Mischung, welche die Luftblasen bildet, eine Dicke von 2 bis 15 µm aufweist.

8. Verfahren nach irgendeinem der Ansprüche 1 bis 7, wobei das Kneten mit einem biaxialen oder einem uniaxialen kontinuierlichen Kneter ausgeführt wird.

9. Verfahren nach Anspruch 8, wobei der biaxiale oder uniaxiale kontinuierliche Kneter einen Auslass mit einer Ringdüsenform oder einer T-Düsenform aufweist.

10. Verfahren nach Anspruch 1, wobei das Kühlen mit einem kalten Wind durchgeführt wird, so dass die geknetete Mischung eine Temperatur von nicht mehr als 30 °C aufweist.

11. Verfahren nach irgendeinem der Ansprüche 1 bis 10, wobei das Pulverisieren durch eine mechanische Mühle durchgeführt wird, so dass die geknetete Mischung ein Gewichtsmittel des Teilchendurchmessers von nicht mehr als 12 µm aufweist.

12. Verfahren nach irgendeinem der Ansprüche 1 bis 11, wobei das Pulverisieren durch eine Strahlmühle oder eine mechanische Mühle durchgeführt wird, so dass die geknetete Mischung ein Gewichtsmittel des Teilchendurchmessers von 4 bis 6 µm aufweist.

## Revendications

1. Procédé de production d'une encre en poudre comprenant au moins une résine liante et un colorant, le procédé comprenant :
le malaxage d'un mélange comprenant la résine liante et le colorant sous pression en injectant un fluide supercritique dans le mélange après application de chaleur pour disperser uniformément le fluide supercritique dans le mélange, la pression dans l'étape de malaxage étant de 4 à 25 MPa ;
la dépressurisation du mélange de sorte que le mélange mousse ;
le refroidissement du mélange pour préparer un mélange malaxé comprenant des bulles d'air ; et
la pulvérisation du mélange malaxé.

2. Procédé de la revendication 1, dans lequel le fluide supercritique est choisi dans le groupe constitué du dioxyde de carbone et de l'azote.

3. Procédé de la revendication 1 ou 2, dans lequel le malaxage est effectué à une température de 10 °C au-dessous du point de fusion du mélange à 100 °C au-dessus du point de fusion de celui-ci.

4. Procédé de la revendication 1 ou 2, dans lequel le malaxage est effectué à une température de 30 °C au-dessous de la température de transition vitreuse de celui-ci à 150 °C au-dessus de la température de transition vitreuse de celui-ci.

5. Procédé de l'une quelconque des revendications 1 à 4, dans lequel le malaxage est effectué en injectant le fluide supercritique dans le mélange en une quantité de 0,5 à 10 % en poids sur la base du poids total du mélange.

6. Procédé de la revendication 1, dans lequel les bulles d'air sont présentes dans le mélange malaxé en une quantité de 10⁴ à 10⁸ unités/cm³ et un rapport des bulles d'air au mélange malaxé est de 65 à 95 % en volume.

7. Procédé de la revendication 1 ou 6, dans lequel un film du mélange malaxé formant les bulles d'air a une épaisseur de 2 à 15 µm.

8. Procédé de l'une quelconque des revendications 1 à 7, dans lequel le malaxage est effectué par un malaxeur continu biaxial ou uniaxial.

9. Procédé de la revendication 8, dans lequel le malaxeur continu biaxial ou uniaxial a une sortie ayant une forme de filière annulaire ou une forme de filière en T.

10. Procédé de la revendication 1, dans lequel le refroidissement est effectué avec un courant d'air froid de sorte que le mélange malaxé ait une température de pas plus de 30 °C.

11. Procédé de l'une quelconque des revendications 1 à 10, la pulvérisation étant effectuée par un pulvérisateur mécanique de sorte que le mélange malaxé ait un diamètre de particule moyen en poids de pas plus de 12 µm.

12. Procédé de l'une quelconque des revendications 1 à 11, la pulvérisation étant effectuée par un pulvérisateur à jet ou un pulvérisateur mécanique de sorte que le mélange malaxé ait un diamètre de particule moyen en poids de 4 à 6 um.
